# EUROPEAN PATENT SPECIFICATION

(11) **EP 4 190 438 B1**
(45) Date of publication and mention of the grant of the patent: **23.07.2025**
(21) Application number: 21849995.2
(22) Date of filing: 12.07.2021
(51) Int. Cl.: B01J 13/04, B22F 9/02, B82Y 40/00, B82B 3/00, B22F 1/054, B22F 1/142, B22F 1/145, B22F 1/16, B22F 9/24

(54) **METHOD FOR OBTAINING ZEROVALENT IRON NANOPARTICLES**
VERFAHREN ZUR GEWINNUNG NULLWERTIGER EISENNANOPARTIKEL
PROCÉDÉ D'OBTENTION DE NANOPARTICULES DE FER À VALENCE ZÉRO

(30) Priority: 27.07.2020 ES 202030780
(43) Date of publication of application: 07.06.2023
(73) Proprietor: Universidad de Alicante, 03690 Alicante (ES)
(72) Inventor: FULLANA FONT, Andrés, 03690 SAN VICENTE DEL RASPEIG (ES); CALDERON ROCA, Blanca, 03690 SAN VICENTE DEL RASPEIG (ES)
(74) Representative: Pons IP
(86) International application number: PCT/ES2021/070506
(87) International publication number: WO 2022/023596

(56) References cited:
- EP-A1- 2 383 374
- EP-A1- 3 659 725
- CN-A- 109 277 078
- US-A1- 2006 175 266
- US-A1- 2008 146 828
- US-A1- 2012 055 873
- CALDERÓN ROCA BLANCA: "Doctoral thesis", 13 July 2017 (2017-07-13), Spain, pages 1 - 232, XP093127129, Retrieved from the Internet <URL:http://hdl.handle.net/10045/69809>
- CALDERON B. ET AL: "Green Synthesis of Thin Shell Carbon-Encapsulated Iron Nanoparticles via Hydrothermal Carbonization", ACS SUSTAINABLE CHEMISTRY & ENGINEERING, vol. 6, no. 6, 25 April 2018 (2018-04-25), US, pages 7995 - 8002, XP093127122, ISSN: 2168-0485, DOI: 10.1021/acssuschemeng.8b01416
- RINCÓN BÁRBARA ET AL: "Influence of a steam-explosion pre-treatment on the methane yield and kinetics of anaerobic digestion of two-phase olive mil solid waste or alperujo", PROCESS SAFETY AND ENVIRONMENTAL PROTECTION, INSTITUTION OF CHEMICAL ENGINEERS, RUGBY, GB, vol. 102, 1 June 2016 (2016-06-01), pages 361 - 369, XP029644567, ISSN: 0957-5820, DOI: 10.1016/J.PSEP.2016.04.010
- BONAITI STEFANIA ET AL: "Nitrogen activation of carbon-encapsulated zero-valent iron nanoparticles and influence of the activation temperature on heavy metals removal", vol. 64, 1 May 2017 (2017-05-01), pages 012070, XP093127116, ISSN: 1755-1307, Retrieved from the Internet <URL:https://iopscience.iop.org/article/10.1088/1755-1315/64/1/012070/pdf> DOI: 10.1088/1755-1315/64/1/012070
- NIU HONGYUN, WANG YIXUAN, ZHANG XIAOLE, MENG ZHAOFU, CAI YAQI: "Easy Synthesis of Surface-Tunable Carbon-Encapsulated Magnetic Nanoparticles: Adsorbents for Selective Isolation and Preconcentration of Organic Pollutants", APPLIED MATERIALS & INTERFACES, AMERICAN CHEMICAL SOCIETY, US, vol. 4, no. 1, 25 January 2012 (2012-01-25), US , pages 286 - 295, XP055904224, ISSN: 1944-8244, DOI: 10.1021/am201336n

## Description

The present invention relates to a method for producing graphitised carbon-coated magnetic iron nanoparticles using agricultural waste with a high polyphenol content. Said particles can be applied in different fields of the industry, such as electrochemistry, renewable energy and the removal of pollutants in water, air and soil.

Therefore, this invention lies within the field of revaluation of agricultural waste for the production of advanced materials with added value.

### BACKGROUND OF THE INVENTION

Zerovalent iron nanoparticles are used in different environmental applications, ranging from heavy metal ion removal to biogas production. One of the problems with these types of particles is that they tend to agglomerate, reducing the effectiveness thereof. Furthermore, it has been shown that under certain conditions they can re-release the pollutants they had retained into the environment. Current production methods for zerovalent iron nanoparticles are expensive and environmentally inefficient. Thus, the application thereof on an industrial scale has not yet reached the market.

One solution to the problems of agglomeration and the release of pollutants is to coat the nanoparticles with different materials to improve the dispersion thereof into the environment without affecting their reactivity. Of the coatings that can be achieved, graphitised carbon coatings are one of the most interesting types, given that they allow nanoparticles to be applied in the production of electrodes, as well as in environmental decontamination.

There are different methods for producing zero-valence iron nanoparticles coated with a layer of graphitised carbon. Thus, for example, patent document US5472749A describes a method for synthesising metal nanocrystals and the alloys thereof coated with a layer of graphite using method based on generating an electric arc. Through this method, the material to be encapsulated is vaporised by generating an electric arc between a tungsten cathode and a metal anode, placing a graphite crucible in the reaction chamber. Said chamber is filled with an inert gas, which serves to carry the nanoparticles to the collection chamber.

Patent document US20080213189A1 describes a method for producing metals and the alloys thereof coated with a layer of graphite by means of a chemical vapor deposition process. The process consists of vaporising the metal or metals adsorbed onto silica, and bringing them into contact with a carbon-rich gas stream, which produces the coating of metal particles. Then, the silica is removed by acid digestion.

Although these methods, which are based on carbon deposition at high temperature or on using a large amount of electrical energy, produce a high-quality material, they have very high production costs, which makes them unpractical in environmental applications.

Patent document US20130343996A1 describes a method for producing graphitised magnetic nanoparticles with iron cobalt cores. In this case, the production method takes place in two phases: a first phase in which iron and cobalt precursors are dissolved with a carbohydrate in a solution at a temperature between 80-120 °C for 8 hours, and a second phase in which the resulting solid is filtered and treated with argon at temperatures between 500-600 °C.

Although this production method has advantages over gas-phase carbon deposition, given that it is carried out at low temperatures, it nonetheless requires long reaction times, which increases costs and makes it unpractical for industrial production. Furthermore, the liquid resulting from the reaction with the carbohydrate generates highly contaminating waste, due to the cobalt, iron and organic matter content thereof.

Document Niu H. et al. ACS Appl. Mater. interfaces 2012, 4, 1, 286-295, relates to a method for obtaining graphitised iron nanoparticles from a starch or glucose solution, characterised in that it comprises a dispersion step of the previous solution in 0.8 g of Fe₃O₄ nanoparticles, followed by hydrothermal carbonisation at approximately 180 °C for 4 hours, obtaining amorphous carbon-coated iron nanoparticles, followed by 4 hours of gas-phase graphitisation of the amorphous carbon-coated iron nanoparticles obtained in the previous step and, lastly, the isolation of the graphitised particles obtained. This process produces very low yields; only 5% of Fe(0) by weight.

Document EP2383374A1 discloses a process for obtaining graphitised iron nanoparticles from a glucose solution and an iron salt. In the process, there is a hydrothermal carbonisation of the graphite precursor at 160-200 °C and a gas phase graphitisation of the amorphous carbon-coated iron nanoparticles obtained between 450-700 °C and in an inert atmosphere.

Document EP3659725A1 discloses a method for obtaining graphitised iron nanoparticles from a mixture comprising a transition metal source and a polybasic organic carboxylic acid with a solvent to form a homogeneous solution, removing the solvent from the homogeneous solution to obtain a precursor, and subjecting the precursor to high temperature pyrolysis under an inert protective atmosphere or a reducing atmosphere.

Document CALDERON B. et al, ACS sustainable chemistry & engineering, vol.6, no. 6, pages 7995-8002, 25 April 2018 discloses a method for obtaining graphitized zero-valent iron nanoparticles from agricultural waste in the form of OMW or oil mill waste-water, in which the agricultural waste is conditioned by centrifugation, followed by hydrothermal carbonization of the permeate, subsequent gas-phase graphitization and isolation of the obtained amorphous carbon-coated nanoparticles.

Considering the foregoing points, it is clear that current methods in the literature relating to obtaining zerovalent iron particles have very high production costs, and thus they are not industrially viable given that they have very low yields or produce a large amount of waste. Therefore, there is a need to provide a method for producing nanoparticles of this type at low costs that enables them to be applied in environmental processes.

### DESCRIPTION OF THE INVENTION

The present invention relates to a method that allows iron nanoparticles coated with a thin layer (<5 nm) of high-purity graphite to be obtained, similar to those obtained by deposition or electrical discharge, but at much lower production costs, and using a fully integrated process that does not produce any waste streams, since the products and byproducts obtained are used in the same process. Furthermore, high yields of Fe(0) (<50% by weight of iron) are obtained, thanks to the presence of polyphenols in the process.

Therefore, the present invention relates to a method for obtaining graphitised zerovalent iron nanoparticles from agricultural waste that contains polyphenols, as defined by claim 1.

The agricultural waste used in the method is a carbonaceous material with polyphenol content. The polyphenol content of this waste is essential in order for the particles produced to have a nanometric size in step b) of the method. Furthermore, this waste is very difficult to treat in the industry given the high content of organic matter thereof, and thus the invention herein disclosed provides a solution to this problem and allows waste to be integrated into an industrial process to produce a product with added value.

The combination of polyphenols, the graphitisation in a reducing environment and the magnetic separation that eliminates particles with a low Fe(0) content give rise to high Fe(0) yields in the process of the invention.

Proper selection and conditioning of the starting carbonaceous material by means of ultrafiltration allows the production efficiency of graphitised iron nanoparticles to be increased, thereby increasing the quality of the product obtained. The graphitised iron nanoparticles are subsequently synthesised by means of a method that combines the hydrothermal carbonisation of agricultural waste with a high polyphenol content and subsequent graphitisation of the product obtained in the gas phase.

The agricultural waste comprises at least 1% by weight of polyphenols with respect to the total volatile solids of the waste, preferably between 5 and 20% with respect to the total volatile solids.

As is known by a person skilled in the art, volatile solids (VS) are understood as the solids that remain after drying the sample but which are lost when the waste is calcined at a temperature between 400 °C and 900 °C.

In another preferred embodiment, the agricultural waste is alperujo. As is well known by a person skilled in the art, alperujo is a by-product of the mills during the extraction of olive oil; it is the mixture of: olive water content or alpechines; the solid parts of the olive, such as the seed, the mesocarp and the skin; and the fatty remains. This is defined as everything that remains from the milled olive once the olive oil is removed.

Nevertheless, other agricultural waste can also be used from the production of coffee, tea, etc.

The mixing with water from step a), prior to ultrafiltration, is carried out until the total solid content in the mixture is less than 10% by weight.

The ultrafiltration of step a) is carried out with filters with a pore diameter between 70-100 nm.

The hydrothermal carbonisation of step b) is carried out by bringing the permeate obtained in step a) into contact with an aqueous solution of an iron salt in a reactor at temperatures between 150 and 275 °C.

The iron salt is chosen from a list comprising: FeCl₃, Fe₂SO₄, FeCl₂, Fe(NO₃)₃, Fe₂(SO₄)₃, or the combination thereof.

Between 0.1-1 kg of iron salt/kg dry matter of the permeate obtained in the previous ultrafiltration step is added (the permeate contains soluble organic matter).

In a preferred embodiment of the hydrothermal carbonisation, the reaction time of the permeate with the iron salt solution at the indicated temperature is at least 30 minutes.

The gas-phase graphitisation of the amorphous carbon-coated iron nanoparticles of step c) is carried out at a temperature between 600 and 800 °C in an inert or reducing atmosphere, for example, a nitrogen atmosphere. This inert or reducing atmosphere may include between 1 and 2% by volume of air or oxygen, preferably 1 %. The presence of small amounts of oxygen can help remove non-graphitised carbon.

Graphitisation is carried out for at least one hour.

In a preferred embodiment, the isolation of the graphitised particles of step c) is carried out by means of a magnetic separator that strongly attracts the graphitised particles and does not attract the non-graphitised particles that have less magnetisation.

In a preferred embodiment, the graphitised zerovalent iron nanoparticles obtained in c) are stabilised through moistening with the residual aqueous stream obtained in b).

In a preferred embodiment, the solid waste obtained in step a) is subjected to anaerobic digestion to produce biogas and a second solid waste. Preferably, the non-graphitised particles of step c) are used as an additive in anaerobic digestion. The biogas thus obtained can be used as heating fuel in steps b) and c) and the solid waste obtained in anaerobic digestion can be used as fertiliser.

The method of the invention, as previously described, takes not only the production of nanoparticles into account, but also integrates all of the waste streams, thereby making the method sustainable from the economic and environmental point of view. To do so, a purification treatment of the product obtained is carried out, such that the iron nanoparticles that have not been graphitised are used as an anaerobic digestion additive that treats both waste streams and excess agricultural waste. Waste with polyphenols create problems in anaerobic digestion. However, the addition of carbon with embedded zerovalent iron substantially improves this process. The biogas obtained in anaerobic digestion is used to heat the steps that require temperature and the digestate can preferably be used as iron-enriched fertiliser. The gases produced both in carbonisation and in the activation of the nanoparticles can be introduced into the digester to be converted to methane through biological methanation, Schwede, S., et al (2017), Biological syngas methanation via immobilized methanogenic archaea on biochar. Energy Procedia, 105, 823-829) also eliminating the gaseous waste of the process.

The nanoparticles obtained through the method of the invention are coated with a thin layer (<5 nm) of graphite and have diameters between 20 and 50 nm.

These nanoparticles have applications, for example in the field of water treatment, biogas production, electrochemistry and fertilisers.

Throughout the description and the claims, the word "comprises" and its variants do not intend to exclude other technical features, additives, components or steps. For those skilled in the art, other objects, advantages and features of the invention may be partially deduced from both the description and the embodiment of the invention. The following examples and figures are provided by way of illustration and are not intended to limit the present invention.

### BRIEF DESCRIPTION OF THE FIGURES

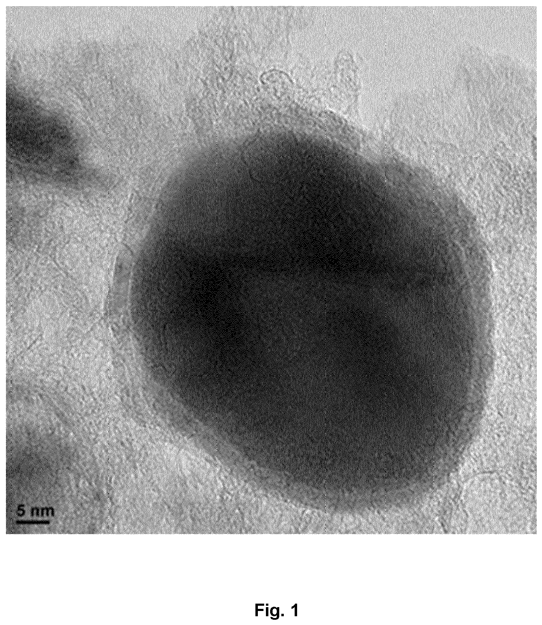

**Fig. 1**: TEM (transmission electron microscope) image of a graphitised zerovalent iron nanoparticle.

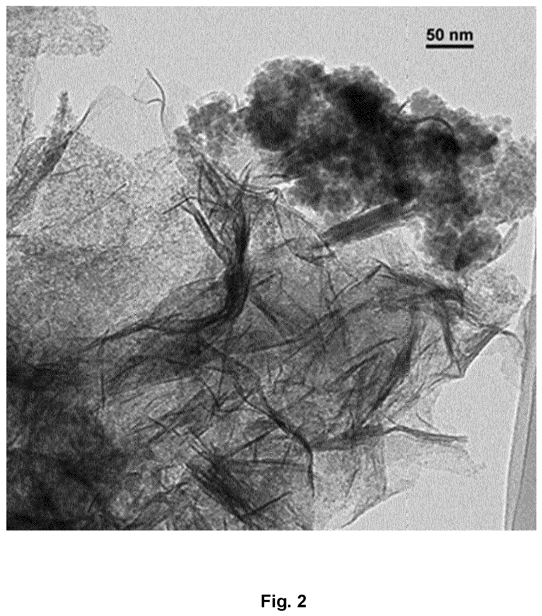

**Fig. 2**: TEM image of carbonised impurities with embedded iron nanoparticles that form in hydrothermal carbonisation (stream (5)). In the process c) of the present intention, it is used to remove these impurities, as well as to graphitise the carbon that is around the nanoparticles.
**Fig. 3**: Diagram of the method of the present invention.

### EXAMPLES

Below, the invention will be shown by means of an example of the method of the invention.

### Example 1: Method for obtaining graphitised zerovalent particles by means of the method of the invention

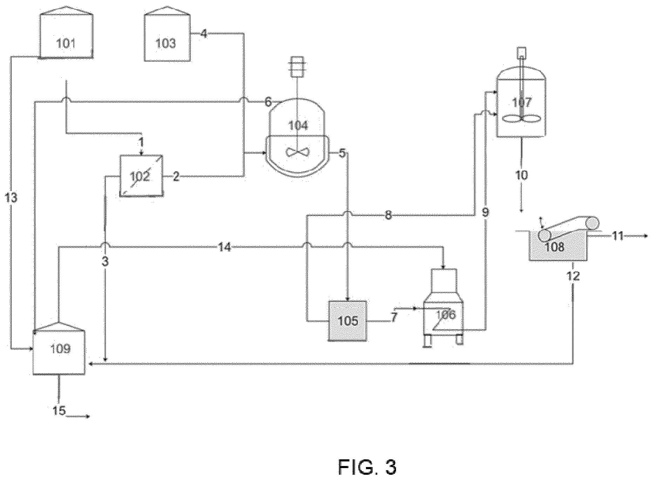

In step 1, the raw material used as the carbonaceous phase in the process is conditioned. In this case, alperujo was used. Said waste was ground and mixed with water until a fluid aqueous suspension with a total solid content of less than 10% by weight was produced. This suspension (1) was stored in a tank (101) (see figure 3). The aqueous phase was separated from the solid phase by using ultrafiltration equipment (102) with a pore size between 70-100 nm, thus obtaining a permeate (2) and solid waste (3). The permeate (2), which must be free of suspended solids and which contains soluble organic matter, was taken to the autoclave reactor (104). The solid waste stream (3) was carried to the waste storage tank before going to an anaerobic digester for subsequent treatment.

The next step of the method consisted of the hydrothermal carbonisation of the permeate obtained in step 1. In this step, amorphous carbon-coated iron nanoparticles were produced. To do this, the ultrafiltered permeate stream (2) coming from the block for conditioning the raw material by ultrafiltration (102) was introduced into the reactor (104) with an iron chloride (FeCl₃) solution (4) that is in a tank (103). Preferably, the relationship between the salt solution and the ultrafiltered stream was 0.5 kg of salt/ kg dry matter of the permeate obtained. The reaction was carried out in the stirred autoclave reactor (104) at 225 °C for a period of 30 minutes. Under these conditions, zerovalent iron nanoparticles with an average size of 50 nm coated with a thin layer of amorphous carbon (less than 5 nm) were obtained. The product from the reaction (5) was filtered in the unit (105), thereby obtaining two streams: one of carbon-coated nanoparticles (7), which were taken to the activation phase, and a residual aqueous stream (8).

Then, the gas-phase graphitisation of the nanoparticles and the elimination of the non-graphitisable carbon was carried out. To do so, the stream, (7) coming from the reactor (104), previously filtered in the filtration unit (105), was introduced in an oven (106) at a temperature of 700 °C for one hour in an inert or reducing atmosphere, preferably with nitrogen. After the reaction was completed, a stream of water was used to remove the solid product from the oven. Furthermore, the water has the function of stabilising the nanoparticles, which are highly reactive, and preventing the spontaneous reaction of the same with the air. The water used comes from the aqueous phase of the previous filtration step (8). Once the nanoparticles were stabilised in the mixer (107), the mixture (10) of nanoparticles and water was sent to a magnetic separator (108), from which two streams came out, one formed by graphitised magnetic nanoparticles (11), strongly attracted by the magnet, and another stream formed by carbon agglomerates with iron nanoparticles, the magnetisation/weight ratio of which is low (12). This stream (12) was used as an additive in the anaerobic digestion of the solid waste (3) obtained in the first step.

Lastly, the residual streams were treated and they were integrated into the process. The aqueous streams of the process (3 and 12) were treated in an anaerobic digester (109), from which biogas was obtained, which was used both for heating the hydrothermal carbonisation reactor (104) and the graphitisation oven (106). One part of the original alperujo waste (13) was used to increase biogas production (one part of the stream (7) could also be used to improve the quality of the biogas obtained in the digester). A pasty solid waste (15) was also obtained from the digester, which can be used as fertiliser. The properties of the fertilisers improve by the fact that they contain iron nanoparticles. The gas (6) produced in the autoclave reactor (104) is bubbled in the anaerobic digester (109), removing possible polluting gases, such as HCl, NOx or SO₂ produced during carbonisation, thereby improving the quality of the biogas by converting carbon monoxide into methane.

## Claims

1. A method for obtaining graphitised zerovalent iron nanoparticles from agricultural waste that contains at least 1% polyphenols with respect to the total volatile solids, **characterised in that** it comprises the following steps:
a) conditioning of the agricultural waste by grinding, mixing with water until there is a solid content in the mixture of less than 10% weight, and subsequent ultrafiltration with filters with a pore diameter between 70-100 nm, thus obtaining a permeate free of suspended solids and a solid waste,
b) hydrothermal carbonisation of the permeate obtained in step a) by bringing the permeate in contact with an aqueous solution of an iron salt at temperatures between 150 °C and 275 °C during at least 30 minutes, wherein the iron salt is selected from FeCl₃, Fe₂SO₄, FeCl₂, Fe(NO₃)₃, Fe₂(SO₄)₃, or the combination thereof, and wherein 0.1-1 Kg of iron salt/kg dry matter of the permeate is added, obtaining amorphous carbon-coated iron nanoparticles and a residual aqueous stream,
c) gas-phase graphitisation of the amorphous carbon-coated iron nanoparticles obtained in the previous step at a temperature between 600 °C and 800 °C in an inert or reducing atmosphere for at least 1 hour, and isolation of the graphitised particles obtained.

2. The method according to claim 1, wherein the agricultural waste is alperujo.

3. The method according to claims 1 or 2, wherein the inert or reducing atmosphere includes 1% by volume of air or oxygen.

4. The method according to any one of the preceding claims, wherein the isolation of the graphitised particles of step c) is carried out by means of a magnetic separator that strongly attracts the graphitised particles and does not attract the non-graphitised particles that have less magnetisation.

5. The method according to any one of the preceding claims, wherein the graphitised zerovalent iron nanoparticles obtained in c) are stabilised by moistening with the residual aqueous stream obtained in b).

6. The method according to any one of the preceding claims, wherein the solid waste obtained in step a) is subjected to anaerobic digestion to produce biogas and a second solid waste, preferably the solid waste obtained in anaerobic digestion is used as fertiliser.

7. The method according to claim 6, wherein the non-graphitised particles of step c) are used as an additive in anaerobic digestion, preferably the solid waste obtained in anaerobic digestion is used as fertiliser.

8. The method according to any one of the preceding claims 6 to 7, wherein, the biogas obtained from anaerobic digestion is used as heating fuel in steps b) and c), preferably the solid waste obtained in anaerobic digestion is used as fertiliser.

9. The method according to any one of the preceding claims 6 to 8, wherein one part of the agricultural waste containing starting polyphenols and/or one part of the amorphous carbon-coated iron nanoparticles obtained in step b) are used in anaerobic digestion, preferably the solid waste obtained in anaerobic digestion is used as fertiliser.

## Patentansprüche

1. Verfahren zur Gewinnung von graphitierten nullwertigen Eisennanopartikeln aus landwirtschaftlichem Abfall, das mindestens 1 % Polyphenole bezogen auf die gesamten flüchtigen Feststoffe enthält, **dadurch gekennzeichnet, dass** es die folgenden Schritte umfasst:
a) Konditionieren des landwirtschaftlichen Abfalls durch Zerkleinern, Mischen mit Wasser, bis ein Feststoffgehalt in dem Gemisch von weniger als 10 Gew.-% vorliegt, und anschließende Ultrafiltration mit Filtern mit einem Porendurchmesser zwischen 70-100 nm, wobei ein Permeat, das frei von suspendierten Feststoffen ist, und ein fester Abfall gewonnen werden,
b) hydrothermales Karbonisieren des in Schritt a) gewonnenen Permeats, indem das Permeat mit einer wässrigen Lösung eines Eisensalzes bei Temperaturen zwischen 150 °C und 275 °C während mindestens 30 Minuten in Kontakt gebracht wird, wobei das Eisensalz aus FeCl₃, Fe₂SO₄, FeCl₂, Fe(NO₃)₃, Fe₂(SO₄)₃ oder einer Kombination davon ausgewählt wird und wobei 0,1-1 kg Eisensalz/kg Trockensubstanz des Permeats hinzugefügt wird, wobei mit amorphem Kohlenstoff beschichtete Eisennanopartikel und ein wässriger Reststrom gewonnen werden,
c) Gasphasengraphitieren der im vorherigen Schritt gewonnenen, mit amorphem Kohlenstoff beschichteten Eisennanopartikel bei einer Temperatur zwischen 600 °C und 800 °C in einer inerten oder reduzierenden Atmosphäre für mindestens 1 Stunde und Isolieren der gewonnenen graphitierten Partikel.

2. Verfahren nach Anspruch 1, wobei der landwirtschaftliche Abfall Oliventrester (Alperujo) ist.

3. Verfahren nach Anspruch 1 oder 2, wobei die inerte oder reduzierende Atmosphäre 1 Vol.-% Luft oder Sauerstoff beinhaltet.

4. Verfahren nach einem der vorhergehenden Ansprüche, wobei die Isolierung der graphitierten Partikel von Schritt c) mittels eines Magnetabscheiders durchgeführt wird, der die graphitierten Partikel stark anzieht und die nicht graphitierten Partikel, die eine geringere Magnetisierung aufweisen, nicht anzieht.

5. Verfahren nach einem der vorhergehenden Ansprüche, wobei die in c) gewonnenen graphitierten nullwertigen Eisennanopartikel durch Befeuchten mit dem in b) gewonnenen wässrigen Reststrom stabilisiert werden.

6. Verfahren nach einem der vorhergehenden Ansprüche, wobei der in Schritt a) gewonnene feste Abfall einer anaeroben Vergärung unterzogen wird, um Biogas und einen zweiten festen Abfall zu erzeugen, wobei vorzugsweise der bei der anaeroben Vergärung gewonnene feste Abfall als Düngemittel verwendet wird.

7. Verfahren nach Anspruch 6, wobei die nicht graphitierten Partikel von Schritt c) als Additiv bei der anaeroben Vergärung verwendet werden, wobei vorzugsweise der bei der anaeroben Vergärung gewonnene feste Abfall als Düngemittel verwendet wird.

8. Verfahren nach einem der vorhergehenden Ansprüche 6 oder 7, wobei das Biogas, das durch anaerobe Vergärung gewonnen wird, in den Schritten b) und c) als Heizstoff verwendet wird, wobei vorzugsweise der bei der anaeroben Vergärung gewonnene feste Abfall als Düngemittel verwendet wird.

9. Verfahren nach einem der vorhergehenden Ansprüche 6 bis 8, wobei ein Teil des landwirtschaftlichen Abfalls, der Ausgangspolyphenole enthält, und/oder ein Teil der in Schritt b) gewonnenen, mit amorphem Kohlenstoff beschichteten Eisennanopartikel in der anaeroben Vergärung verwendet werden, wobei vorzugsweise der bei der anaeroben Vergärung gewonnene feste Abfall als Düngemittel verwendet wird.

## Revendications

1. Procédé pour l'obtention de nanoparticules de fer zérovalent graphitées à partir d'un déchet agricole qui contient au moins 1 % de polyphénols par rapport aux matières solides volatiles totales, **caractérisé en ce qu'**il comprend les étapes suivantes :
a) le conditionnement du déchet agricole par broyage, mélange avec de l'eau jusqu'à ce qu'il y ait une teneur en matières solides dans le mélange inférieure à 10 % en poids et ultrafiltration subséquente avec des filtres dont le diamètre des pores est compris entre 70 et 100 nm, ce qui permet d'obtenir ainsi un perméat exempt de matières solides en suspension et un déchet solide,
b) la carbonisation hydrothermale du perméat obtenu à l'étape a) par la mise en contact du perméat avec une solution aqueuse d'un sel de fer à des températures comprises entre 150 °C et 275 °C pendant au moins 30 minutes, le sel de fer étant choisi parmi FeCl₃, Fe₂SO₄, FeCl₂, Fe(NO₃)₃, Fe₂(SO₄)₃ ou la combinaison de ceux-ci et 0,1 à 1 kg de sel de fer/kg de matière sèche du perméat étant ajouté, ce qui permet d'obtenir des nanoparticules de fer enrobées de carbone amorphe et un flux aqueux résiduel,
c) la graphitisation en phase gazeuse des nanoparticules de fer enrobées de carbone amorphe obtenues à l'étape précédente à une température comprise entre 600 °C et 800 °C dans une atmosphère inerte ou réductrice pendant au moins 1 heure et l'isolement des particules graphitées obtenues.

2. Procédé selon la revendication 1, dans lequel le déchet agricole est des grignons d'olive.

3. Procédé selon les revendications 1 ou 2, dans lequel l'atmosphère inerte ou réductrice renferme 1 % en volume d'air ou d'oxygène.

4. Procédé selon l'une quelconque des revendications précédentes, dans lequel l'isolement des particules graphitées de l'étape c) est effectué au moyen d'un séparateur magnétique qui attire fortement les particules graphitées et n'attire pas les particules non graphitées qui ont une moindre magnétisation.

5. Procédé selon l'une quelconque des revendications précédentes, dans lequel les nanoparticules de fer zérovalent graphitées obtenues en c) sont stabilisées par humidification avec le flux aqueux résiduel obtenu en b).

6. Procédé selon l'une quelconque des revendications précédentes, dans lequel le déchet solide obtenu à l'étape a) est soumis à une digestion anaérobie pour produire du biogaz et un second déchet solide, de préférence le déchet solide obtenu dans la digestion anaérobie est utilisé comme engrais.

7. Procédé selon la revendication 6, dans lequel les particules non graphitées de l'étape c) sont utilisées comme additif dans la digestion anaérobie, de préférence le déchet solide obtenu dans la digestion anaérobie est utilisé comme engrais.

8. Procédé selon l'une quelconque des revendications 6 ou 7 précédentes, dans lequel le biogaz obtenu à partir de la digestion anaérobie est utilisé comme combustible de chauffage dans les étapes b) et c), de préférence le déchet solide obtenu dans la digestion anaérobie est utilisé comme engrais.

9. Procédé selon l'une quelconque des revendications 6 à 8 précédentes, dans lequel une partie du déchet agricole contenant des polyphénols de départ et/ou une partie des nanoparticules de fer enrobées de carbone amorphe obtenues à l'étape b) sont utilisées dans la digestion anaérobie, de préférence le déchet solide obtenu dans la digestion anaérobie est utilisé comme engrais.
